# EUROPÄISCHE PATENTSCHRIFT

(11) **EP 3 299 119 B1**
(45) Veröffentlichungstag und Bekanntmachung des Hinweises auf die Patenterteilung: **12.09.2018**
(21) Anmeldenummer: 16190714.2
(22) Anmeldetag: 27.09.2016
(51) Int. Cl.: B23Q 1/54, B08B 1/00, B23Q 11/08, B23Q 11/00

(54) **NACHBEARBEITUNGSVERFAHREN FÜR DIE BESTÜCKUNGSSEITE EINER WERKZEUGMASCHINE UND ZUGEHÖRIGE WERKZEUGMASCHINE**
POST-PROCESSING METHOD FOR THE FEEDING SIDE OF A MACHINE TOOL AND CORRESPONDING MACHINE TOOL
PROCÉDÉ DE POST-TRAITEMENT POUR LE CÔTÉ GARNISSAGE D'UNE MACHINE-OUTIL ET MACHINE-OUTIL CORRESPONDANTE

(43) Veröffentlichungstag der Anmeldung: 28.03.2018
(73) Patentinhaber: Schwäbische Werkzeugmaschinen GmbH, 78713 Schramberg-Waldmössingen (DE)
(72) Erfinder: Armleder, Wolfgang, 78628 Rottweil (DE)
(74) Vertreter: Kohler Schmid Möbus Patentanwälte

(56) Entgegenhaltungen:
- EP-A2- 1 101 564
- DE-C1- 19 913 715

## Beschreibung

Die Erfindung betrifft ein Nachbearbeitungsverfahren, insbesondere Reinigungsverfahren, für die Bestückungsseite einer Werkzeugmaschine mit einem um eine horizontale Achse drehbar gelagerten Doppelschwenktisch mit zwei, jeweils um eine zur Achse des Doppelschwenktisches parallele A-Achse drehbar gelagerten Schwenktischen zur Aufnahme von Werkstücken, von denen der eine Schwenktisch auf einer Bearbeitungsseite innerhalb eines Bearbeitungsraums und der andere Schwenktisch auf einer Bestückungsseite innerhalb eines Bestückungsraums vorgesehen ist, wobei der bearbeitungsseitige Schwenktisch und der bestückungsseitige Schwenktisch durch Verschwenken des Doppelschwenktisches vertauschbar sind, sowie auch eine zum Durchführen eines solchen Nachbearbeitungsverfahrens geeignete Werkzeugmaschine zur insbesondere spanenden Bearbeitung von Werkstücken.

Ein derartiges Nachbearbeitungsverfahren in Form eines Reinigungsverfahrens und eine derartige Werkzeugmaschine sind beispielsweise durch die DE 199 13 715 C1 bekannt geworden. Bei diesem bekannten Reinigungsverfahren wird bei geschlossenem Bestückungsraum der bestückungsseitige Schwenktisch automatisch mit einem Fluid abgespült bzw. abgeblasen und dabei während des Abspülens bzw. Abblasens der bestückungsseitige Schwenktisch innerhalb des Bestückungsraums mindestens einmal um seine Achse gedreht, um dadurch Verschmutzungen, wie z. B. Späne, vom Werkstück und vom bestückungsseitigen Schwenktisch zu entfernen.

Weiterhin werden bei solchen Doppelschwenkträgermaschine auch Roboter eingesetzt, die außerhalb des Bestückungsraums angeordnet sind und von oben in den geöffneten Bestückungsraum eingreifen, um die Werkstücke mit einem Nachbearbeitungswerkzeug nachzubearbeiten, also z.B. zu entgraten oder zu bürsten. Allerdings stören solche Roboter den Beladungsvorgang, benötigen einen großen Zustellbereich und führen dazu, dass bei der Nachbearbeitung Schmutz aus dem Bestückungsraum austreten kann. Alternativ kann die Nachbearbeitung der Werkstücke auch außerhalb der Maschine erfolgen, allerdings verbunden mit dem Nachteil eines erhöhten Zeitaufwands und einer erhöhten Verschmutzung außerhalb der Maschinenverkleidung.

Es ist demgegenüber die Aufgabe der Erfindung, bei einem Nachbearbeitungsverfahren der eingangs genannten Art den für die Nachbearbeitung von Werkstücken erforderlichen Zeitaufwand weiter zu reduzieren und dabei gleichzeitig eine Verschmutzung außerhalb der Maschine möglichst auszuschließen, sowie auch eine zugehörige Werkzeugmaschine anzugeben.

Diese Aufgabe wird bei einem Nachbearbeitungsverfahren der eingangs genannten Art erfindungsgemäß dadurch gelöst, dass nach dem Verschwenken eines bearbeiteten Werkstücks von der Bearbeitungsseite auf die Bestückungsseite das Werkstück mit mindestens einem innerhalb des geschlossenen Bestückungsraums angeordneten, rotierenden Nachbearbeitungswerkzeug der Werkzeugmaschine, insbesondere mit mindestens einer Bürste oder Polierscheibe, nachbearbeitet wird, wobei während der Nachbearbeitung der bestückungsseitige Schwenktisch samt dem daran gehaltenen Werkstück um seine A-Achse und damit gegenüber der Rotationsachse des Nachbearbeitungswerkzeugs verschwenkt wird oder das Nachbearbeitungswerkzeug in zwei quer zu seiner Rotationsachse verlaufenden Querrichtungen bewegt und/oder um eine quer zu seiner Rotationsachse verlaufende Achse verschwenkt wird. Bei der Bürste kann es sich beispielsweise um eine Reinigungsbürste, Entgratungsbürste oder Waschbürste handeln.

Erfindungsgemäß ergeben sich insbesondere die folgenden Vorteile:
- keine externen Maschinen oder Einrichtungen zur Nachbearbeitung notwendig;
- Schmutz und Abrieb der Nachbearbeitung bleiben innerhalb des geschlossenen Bestückungsraums und können beispielsweise einer Kühlmittelstoff-Aufbereitung über einen Ablauf zugeführt werden;
- das Nachbearbeitungswerkzeug beansprucht innerhalb des geschlossenen Bestückungsraums nur einen kurzen Zustellbereich;
- die Anordnung des Nachbearbeitungswerkzeugs im Bestückungsraum führt zu einer besseren Austaktung der Maschine, denn die für das Be-/Entladen und das Nachbearbeiten der Werkstücke auf der Bestückungsseite erforderliche Zeitdauer ist gleich oder kleiner als die zum Bearbeiten der Werkstücke auf der Bearbeitungsseite erforderliche Zeitdauer.

Vorzugsweise befindet sich das Werkstück während der Nachbearbeitung unten bzw. nach unten hängend am bestückungsseitigen Schwenktisch, so dass anfallender Schmutz nach unten fällt und jedenfalls nicht am Werkstück haften bleibt.

Nach dem Verschwenken des bearbeiteten Werkstücks von der Bearbeitungsseite auf die Bestückungsseite kann das Zustellen des Nachbearbeitungswerkzeugs vorteilhaft dadurch erfolgen, dass das Nachbearbeitungswerkzeug aus einer Parkposition bis in eine Arbeitsposition verfahren wird, in der es am nachzubearbeitenden Werkstück anliegt. Idealerweise wird dabei das Nachbearbeitungswerkzeug in axialer Richtung seiner Rotationsachse verfahren, aber auch jede andere Zustellrichtung ist möglich. In einer besonders bevorzugten Verfahrensvariante wird das Nachbearbeitungswerkzeug aus einer unterhalb des bestückungsseitigen Schwenktischs bzw. des nachzubearbeitenden Werkstücks befindlichen Parkposition von unten bis in die Arbeitsposition hochgefahren, so dass das Nachbearbeitungswerkzeug das von der Seite oder von oben erfolgende Be-/Entladen von Werkstücken nicht stört.

Für eine Ringsum-Nachbearbeitung kann das Werkstück am bestückungsseitigen Schwenktisch um eine zur A-Achse rechtwinklige C-Achse gedreht werden.

Vorzugsweise werden das auf der Bestückungsseite befindliche Werkstück und/oder der bestückungsseitige Schwenktisch vor, während und/oder nach der Nachbearbeitung abgespült oder abgeblasen. Beispielsweise wird gereinigte Kühlflüssigkeit gegen Schwenktisch und Werkstück gespritzt, wodurch Verschmutzungen, wie z.B. Späne, abgereinigt werden.

Die oben genannte Aufgabe wird auch gelöst durch eine Werkzeugmaschine zur insbesondere spanenden Bearbeitung von Werkstücken mit einem im Maschinengestell um eine horizontale Achse drehbar gelagerten Doppelschwenktisch mit zwei, jeweils um eine zur Achse des Doppelschwenktisches parallele A-Achse drehbar gelagerten Schwenktischen zur Aufnahme von Werkstücken, von denen der eine Schwenktisch auf einer Bearbeitungsseite innerhalb eines Bearbeitungsraums und der andere Schwenktisch auf einer Bestückungsseite innerhalb eines Bestückungsraums vorgesehen ist, wobei der bearbeitungsseitige Schwenktisch und der bestückungsseitige Schwenktisch durch Verschwenken des Doppelschwenktisches vertauschbar sind und wobei erfindungsgemäß innerhalb des geschlossenen Bestückungsraums eine Nachbearbeitungseinrichtung mit mindestens einem rotierbaren Nachbearbeitungswerkzeug, insbesondere mit mindestens einer Bürste oder Polierscheibe, zur Nachbearbeitung der am bestückungsseitigen Schwenktisch befindlichen Werkstücke angeordnet ist und mindestens ein Antrieb zum Verfahren des Nachbearbeitungswerkzeugs quer zu seiner Rotationsachse und/oder zum Verschwenken um eine quer zu seiner Rotationsachse verlaufende Achse vorgesehen ist.

Die erfindungsgemäße Werkzeugmaschine umfasst bevorzugt einen Antrieb, insbesondere Linearantrieb, zum Verfahren (Zustellen) des Nachbearbeitungswerkzeugs aus einer Parkposition bis in eine Arbeitsposition, in der es am nachzubearbeitenden Werkstück anliegt. Die Zustellung erfolgt vorteilhaft in axialer Richtung der Rotationsachse des Nachbearbeitungswerkzeugs. Dabei befindet sich die Parkposition des Nachbearbeitungswerkzeugs unterhalb des bestückungsseitigen Schwenktischs oder des nachzubearbeitenden Werkstücks sowie außerhalb des Schwenkbereichs des Doppelschwenktischs.

Vorteilhaft sind die Werkstücke an den Schwenktischen um eine zur A-Achse rechtwinklige C-Achse drehbar gelagert. Im Falle einer oder mehrerer auf der Bearbeitungsseite in drei Achsen verfahrbaren Arbeitsspindeln, die ein spanabhebendes Werkzeug aufnimmt, der jeweils um ihre A-Achsen verschwenkbaren Werkstücktische und einer am Werkstücktisch um die C-Achse drehbar gelagerten Werkstückaufnahme ergibt sich somit insgesamt eine 5-achsige, 1... n-spindlige Doppelschwenkträgermaschine.

Die erfindungsgemäße Werkzeugmaschine umfasst bevorzugt auch noch eine innerhalb des geschlossenen Bestückungsraums angeordnete Blas- und/oder Spüleinrichtung zum Abspülen bzw. Abblasen eines auf der Bestückungsseite befindlichen Werkstücks und/oder des bestückungsseitigen Schwenktischs. Beispielsweise kann die Blas- und/oder Spüleinrichtung eine oder mehrere Düsen aufweisen, die in Richtung auf den bestückungsseitigen Schwenktisch ausgerichtet sind, um das Werkstück und den bestückungsseitigen Schwenktisch mit Druckluft oder Reinigungsflüssigkeit abzureinigen.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Die Erfindung ist in den Figuren schematisch dargestellt, so dass die wesentlichen Merkmale der Erfindung gut zu erkennen ist. Die Darstellungen sind nicht notwendigerweise maßstäblich zu verstehen.

Es zeigt:
- Fig. 1: schematisch eine erfindungsgemäße horizontale Doppelschwenkträgermaschine mit einem Doppelschwenktisch als Werkstückträger und mit einer im Bestückungsraum vorgesehenen Nachbearbeitungseinrichtung in einer Seitenansicht;
- Fig. 2: die Vorderansicht der Doppelschwenkträgermaschine entsprechend II in Fig. 1 bei abgenommener Front- bzw. Beladetür;
- Fig. 3: eine Detailansicht der in Fig. 1 gezeigten Nachbearbeitungseinrichtung;
- Fig. 4: einen Ausschnitt der in Fig. 3 gezeigte Nachbearbeitungseinrichtung mit zusätzlich verschenktem Schwenktisch; und
- Fig. 5: die in Fig. 3 gezeigte Nachbearbeitungseinrichtung bei der Nachbearbeitung der Innenkontur eines Werkstücks.

In der folgenden Figurenbeschreibung werden für gleiche bzw. funktionsgleiche Bauteile identische Bezugszeichen verwendet.

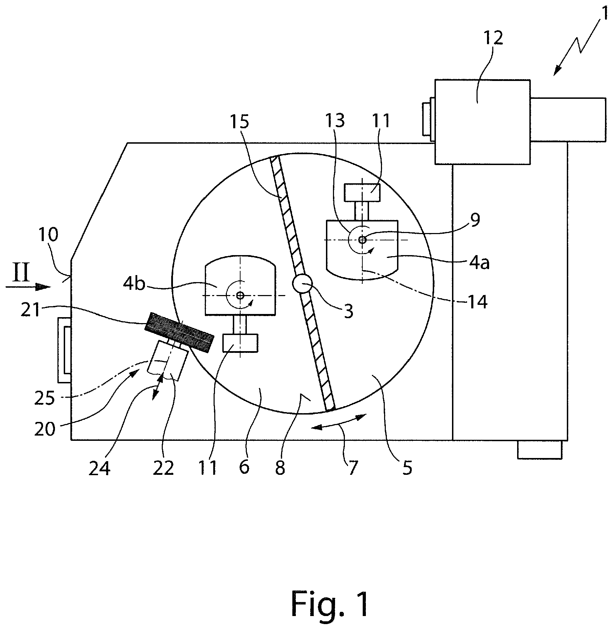

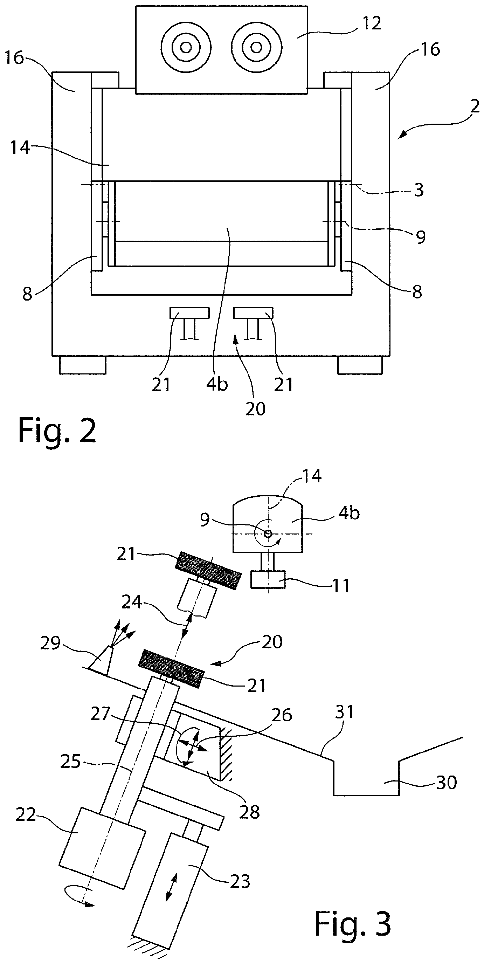

Bei der in **Fign. 1** **und** **2** insgesamt mit **1** bezeichneten Werkzeugmaschine zur spanenden Bearbeitung von Werkstücken ist im rahmenartigen Maschinengestell **2** um eine horizontale Achse **3** ein Doppelschwenktisch (Doppelschwenkbalken) schwenkbar gelagert, dessen einer Schwenktisch **4a** (in Fig. 1 der rechte) auf der Bearbeitungsseite **5** innerhalb eines Bearbeitungsraums und dessen anderer Schwenktisch **4b** (in Fig. 1 der linke) auf der Belade- oder Bestückungsseite **6** innerhalb eines Bestückungsraums vorgesehen sind. Durch Verschwenken (Pfeilrichtung **7**) des Doppelschwenktisches um die horizontale Achse 3 um 180° lassen sich der bearbeitungsseitige Schwenktisch 4a und der bestückungsseitige Schwenktisch 4b vertauschen. Die beiden Schwenktische 4a, 4b sind zwischen und an zwei Schwenkscheiben **8,** welche seitlich am Maschinengestell 2 um die horizontale Achse 3 gelagert sind, jeweils um eine horizontale Schwenkachse (A-Achse) **9** verschwenkbar gelagert. Die Bearbeitungs- und Bestückungsräume sind entweder jeweils in sich geschlossene Maschinenräume oder bilden gemeinsam einen in sich geschlossenen Maschinenraum.

Der Schwenktisch 4b wird bei geöffneter Beladetür **10** mit neuen Werkstücken (z.B. mit Impellern) **11** bestückt, die dann nach Vertauschen der Schwenktische 4a, 4b auf der Bearbeitungsseite 5 mittels eines in einer horizontalen Arbeitsspindel **12** aufgenommenen Werkzeuges bearbeitet werden. Zum Vertauschen der Schwenktische 4a, 4b wird der Doppelschwenktisch in Schwenkrichtung 7 um 180° geschwenkt, wodurch sich mit vertauschten Schwenktischen 4a, 4b wieder die in Fig. 1 gezeigte Anordnung ergibt. Zusätzlich können dabei auch einer oder beide Schwenktische 4a, 4b um ihre Schwenkachsen 9 in Schwenkrichtung **13** geschwenkt werden. Die Werkstücke 11 sind an den Schwenktischen 4a, 4b um eine zur A-Achse 9 rechtwinklige C-Achse **14** drehbar gelagert. Mit den zwei in Fig. 2 gezeigten, in drei Achsen verfahrbaren Arbeitsspindeln 12, mit den jeweils um ihre A-Achse 9 verschwenkbaren Schwenktischen 4a, 4b und mit der am Schwenktisch um die C-Achse 14 drehbar gelagerten Werkstückaufnahme ergibt sich somit insgesamt eine 5-achsige, 2 spindlige Doppelschwenkträgermaschine.

Zwischen und an den beiden Schwenkscheiben 8 ist eine feststehende Spritzschutzwand **15** (z. B. ein dünnes Blech) befestigt, die in der in Fig. 1 dargestellten Schwenkendposition des Doppelschwenktisches die Bearbeitungs- und Bestückungsseiten 5, 6 voneinander trennt. Auf diese Weise kann während des Bearbeitens der Werkstücke 11 auf der Bearbeitungsseite 5 ein neues Werkstück 11 auf der Bestückungsseite aufgespannt werden, wobei das Bedienungspersonal vor spritzendem Bohrwasser oder herumfliegenden Bohrspänen etc. geschützt ist. Diese Spritzschutzwand 14 verläuft in einer Radialebene der horizontalen Achse 3 zwischen den beiden Schwenktischen 4a, 4b. Wie Fig. 2 weiter zeigt, sind die Schwenktische 4a, 4b an den Schwenkscheiben 8 um die horizontale A-Achse 9 und diese an den vertikalen Seitenwänden **16** des Maschinengestells 2 um die horizontale Achse 3 schwenkbar gelagert.

Innerhalb des geschlossenen Bestückungsraums ist eine Nachbearbeitungseinrichtung **20** mit einer oder mehreren rotierbaren Nachbearbeitungswerkzeugen **21** zum hauptzeitparallelen Nachbearbeiten eines am bestückungsseitigen Schwenktisch 4b befindlichen Werkstücks 11 angeordnet. Bei den Nachbearbeitungswerkzeugen 21 kann es sich beispielsweise um eine Reinigungsbürste, Entgratungsbürste, Waschbürste oder um eine Polierscheibe handeln. Der Motor für die Rotation des Nachbearbeitungswerkzeugs 21 ist mit **22** bezeichnet.

Wie in **Fig. 3** gezeigt, kann das Nachbearbeitungswerkzeug 21 durch einen z.B. pneumatisch angetriebenen Linearantrieb **23** in axialer Richtung **24** der Rotationsachse (V-Achse) **25** des Nachbearbeitungswerkzeugs 21 zwischen einer unteren Parkposition bis in eine obere Arbeitsposition verfahren (zugestellt) werden, in der es an dem nach unten hängenden, nachzubearbeitenden Werkstück 11 anliegt. Die Parkposition des Nachbearbeitungswerkzeugs 21 befindet sich bevorzugt unterhalb des bestückungsseitigen Schwenktischs 4b bzw. des nachzubearbeitenden Werkstücks 11 und außerhalb des Schwenkbereichs des Doppelschwenktisches. Die Zustellung des Nachbearbeitungswerkzeugs 21 in zwei Querrichtungen **26** und in Schwenkrichtung **27** erfolgt durch nicht näher gezeigte kartesische und winklige Antriebe gegenüber einer Maschinenkonsole **28**.

Innerhalb des geschlossenen Bestückungsraums ist weiterhin eine Blas- und/oder Spüleinrichtung **29** zum hauptzeitparallelen Abspülen bzw. Abblasen eines auf der Bestückungsseite 6 befindlichen Werkstücks 11 und des bestückungsseitigen Schwenktischs 4b angeordnet. Die Blas- und/oder Spüleinrichtung 29 befindet sich bevorzugt unterhalb des bestückungsseitigen Schwenktischs 4b bzw. des nachzubearbeitenden Werkstücks 11 und außerhalb des Schwenkbereichs des Doppelschwenktisches und weist eine oder mehrere Düsen auf, die in Richtung auf den bestückungsseitigen Schwenktisch 4b ausgerichtet sind, um den bestückungsseitigen Schwenktisch 4b und die darauf befindlichen Werkstücke 11 mit Druckluft oder Reinigungsflüssigkeit abzureinigen. Der bei der Nachbearbeitung anfallende Schmutz und Abrieb sowie die Reinigungsflüssigkeit bleiben innerhalb des geschlossenen Bestückungsraums und werden einer Kühlmittelstoff-Aufbereitung über einen Ablauf **30** in der Maschinenverkleidung **31** zugeführt.

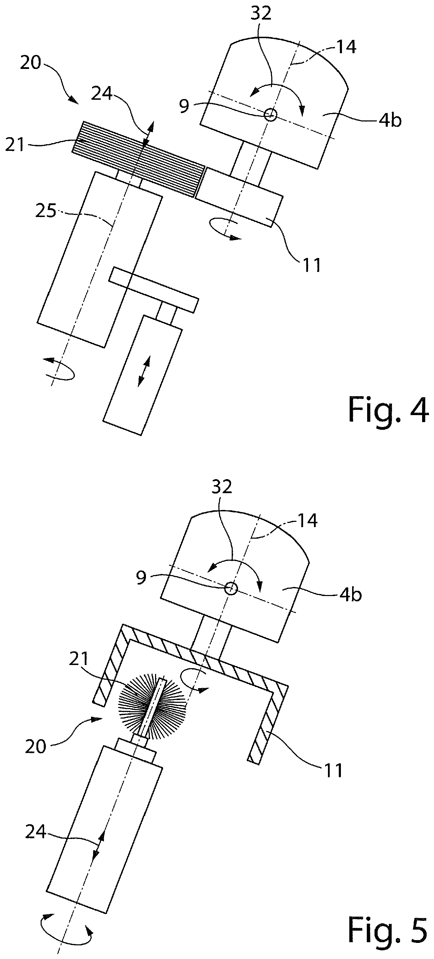

Wie in **Fig. 4** gezeigt, kann während der Nachbearbeitung der bestückungsseitige Schwenktisch 4b samt dem daran gehaltenen Werkstück 11 um seine A-Achse 9 und damit gegenüber der Rotationsachse 25 des Nachbearbeitungswerkzeugs 21 verschwenkt werden (Doppelpfeil **32**), wodurch die Nachbearbeitung von unterschiedlichen Seiten oder Richtungen erfolgt. Während in Fig. 4 die Außenkontur des Werkstücks 11 mittels des Nachbearbeitungswerkzeugs 21 bearbeitet wird, wird in **Fig. 5** die Innenkontur des Werkstücks 11 mittels des Nachbearbeitungswerkzeugs 21 bearbeitet. Durch eine Interpolation von A-, C-, V-Achsen lassen sich auch eckige Konturen von Werkstücken 11 innen oder außen nachbearbeiten.

## Patentansprüche

1. Nachbearbeitungsverfahren, insbesondere Reinigungsverfahren, für die Bestückungsseite (6) einer Werkzeugmaschine (1) mit einem um eine horizontale Achse (3) drehbar gelagerten Doppelschwenktisch mit zwei, jeweils um eine zur Achse (3) des Doppelschwenktisches parallele A-Achse (9) drehbar gelagerten Schwenktischen (4a, 4b) zur Aufnahme von Werkstücken (11), von denen der eine Schwenktisch (4a) auf einer Bearbeitungsseite (5) innerhalb eines Bearbeitungsraums und der andere Schwenktisch (4b) auf einer Bestückungsseite (6) innerhalb eines Bestückungsraums vorgesehen ist, wobei der bearbeitungsseitige Schwenktisch (4a) und der bestückungsseitige Schwenktisch (4b) durch Verschwenken des Doppelschwenktisches vertauschbar sind,
**dadurch gekennzeichnet,**
**dass** nach dem Verschwenken eines bearbeiteten Werkstücks (11) von der Bearbeitungsseite (5) auf die Bestückungsseite (6) das Werkstück (11) mit mindestens einem innerhalb des geschlossenen Bestückungsraums angeordneten, rotierenden Nachbearbeitungswerkzeug (21) der Werkzeugmaschine (1), insbesondere mit mindestens einer Bürste oder Polierscheibe, nachbearbeitet wird, wobei während der Nachbearbeitung der bestückungsseitige Schwenktisch (4b) samt dem daran gehaltenen Werkstück (11) um seine A-Achse (9) und damit gegenüber der Rotationsachse (25) des Nachbearbeitungswerkzeugs (21) verschwenkt wird oder das Nachbearbeitungswerkzeug (21) in zwei quer zu seiner Rotationsachse (25) verlaufenden Querrichtungen (26) bewegt und/oder um eine quer zu seiner Rotationsachse (25) verlaufende Achse verschwenkt wird.

2. Nachbearbeitungsverfahren nach Anspruch 1, **dadurch gekennzeichnet, dass** sich das Werkstück (11) während der Nachbearbeitung unten am bestückungsseitigen Schwenktisch (4b) befindet.

3. Nachbearbeitungsverfahren nach einem der vorhergehenden Ansprüche,
**dadurch gekennzeichnet, dass** nach dem Verschwenken des bearbeiteten Werkstücks (11) von der Bearbeitungsseite (5) auf die Bestückungsseite (6) das Nachbearbeitungswerkzeug (21) aus einer Parkposition bis in eine Arbeitsposition, in der es am nachzubearbeitenden Werkstück (11) anliegt, verfahren wird, insbesondere in axialer Richtung (24) der Rotationsachse (25) des Nachbearbeitungswerkzeugs (21).

4. Nachbearbeitungsverfahren nach Anspruch 3, **dadurch gekennzeichnet, dass** das Nachbearbeitungswerkzeug (21) aus einer unterhalb des bestückungsseitigen Schwenktischs (4b) oder des nachzubearbeitenden Werkstücks (11) befindlichen Parkposition von unten bis in die Arbeitsposition hochgefahren wird.

5. Nachbearbeitungsverfahren nach einem der vorhergehenden Ansprüche,
**dadurch gekennzeichnet, dass** während der Nachbearbeitung des Werkstücks (11) das Werkstück (11) am bestückungsseitigen Schwenktisch (4b) um eine zur A-Achse (9) rechtwinklige C-Achse (14) gedreht wird.

6. Nachbearbeitungsverfahren nach einem der vorhergehenden Ansprüche,
**dadurch gekennzeichnet, dass** das auf der Bestückungsseite (6) befindliche Werkstück (11) und/oder der bestückungsseitige Schwenktisch (4b) abgespült oder abgeblasen werden.

7. Werkzeugmaschine (1) zur insbesondere spanenden Bearbeitung von Werkstücken (11), mit einem im Maschinengestell (2) um eine horizontale Achse (3) drehbar gelagerten Doppelschwenktisch mit zwei, jeweils um eine zur Achse (3) des Doppelschwenktisches parallele A-Achse (9) drehbar gelagerten Schwenktischen (4a, 4b) zur Aufnahme von Werkstücken (11), von denen der eine Schwenktisch (4a) auf einer Bearbeitungsseite (5) innerhalb eines Bearbeitungsraums und der andere Schwenktisch (4b) auf einer Bestückungsseite (6) innerhalb eines Bestückungsraums vorgesehen ist, wobei der bearbeitungsseitige Schwenktisch (4a) und der bestückungsseitige Schwenktisch (4b) durch Verschwenken des Doppelschwenktisches vertauschbar sind, **gekennzeichnet durch** eine innerhalb des geschlossenen Bestückungsraums angeordnete Nachbearbeitungseinrichtung (20) mit mindestens einem rotierbaren Nachbearbeitungswerkzeug (21), insbesondere mit mindestens einer Bürste oder Polierscheibe, zur Nachbearbeitung der am bestückungsseitigen Schwenktisch (4b) befindlichen Werkstücke (11) und durch mindestens einen Antrieb zum Verfahren (26) des Nachbearbeitungswerkzeugs (21) quer zu seiner Rotationsachse (25) und/oder zum Verschwenken (27) um eine quer zu seiner Rotationsachse (25) verlaufende Achse.

8. Werkzeugmaschine nach Anspruch 7, **gekennzeichnet durch** einen Antrieb (23), insbesondere Linearantrieb, zum Verfahren des Nachbearbeitungswerkzeugs (21), insbesondere in axialer Richtung (24) der Rotationsachse (25) des Nachbearbeitungswerkzeugs (21), aus einer Parkposition bis in eine Arbeitsposition, in der es am nachzubearbeitenden Werkstück (11) anliegt.

9. Werkzeugmaschine nach Anspruch 8, **dadurch gekennzeichnet, dass** die Parkposition des Nachbearbeitungswerkzeugs (21) sich unterhalb des bestückungsseitigen Schwenktischs (4b) oder des nachzubearbeitenden Werkstücks (11) befindet.

10. Werkzeugmaschine nach einem der Ansprüche 7 bis 9, **dadurch gekennzeichnet, dass** die Werkstücke (11) an den Schwenktischen (4a, 4b) um eine zur A-Achse (9) rechtwinklige C-Achse (14) drehbar gelagert sind.

11. Werkzeugmaschine nach einem der Ansprüche 7 bis 10, **gekennzeichnet durch** eine innerhalb des geschlossenen Bestückungsraums angeordnete Blas- und/oder Spüleinrichtung (29) zum Abspülen bzw. Abblasen des auf der Bestückungsseite (6) befindlichen Werkstücks (11) und/oder des bestückungsseitigen Schwenktischs (4b).

## Claims

1. Post-processing method, in particular cleaning method, for the loading side (6) of a machine tool (1), comprising a twin swivel table which is mounted such that it can be rotated about a horizontal axis (3) and comprises two swivel tables (4a, 4b) which are each mounted such that they can be rotated about an A-axis (9) which is parallel to the axis (3) of the twin swivel table, for receiving workpieces (11), one swivel table (4a) of which is provided on a processing side (5) within a processing chamber and the other swivel table (4b) is provided on a loading side (6) within a loading chamber, wherein the swivel table (4a) on the processing side and the swivel table (4b) on the loading side can be exchanged by pivoting the twin swivel table,
**characterized in that**
after pivoting a processed workpiece (11) from the processing side (5) to the loading side (6), the workpiece (11) is post-processed by at least one rotating post-processing tool (21) of the machine tool (1), which is disposed within the closed loading chamber, in particular by at least one brush or polishing wheel, wherein during post-processing, the swivel table (4b) on the loading side including the workpiece (11) held thereon, is pivoted about its A-axis (9) and therefore pivoted with respect to the axis of rotation (25) of the post-processing tool (21) or the post-processing tool (21) is moved in two transverse directions (26) extending transversely to its axis of rotation (25) and/or is pivoted about an axis extending transversely to its axis of rotation (25).

2. Post-processing method according to claim 1, **characterized in that** the workpiece (11) is located below the swivel table (4b) on the loading side during post-processing.

3. Post-processing method according to any one of the preceding claims, **characterized in that** after pivoting the processed workpiece (11) from the processing side (5) to the loading side (6), the post-processing tool (21) is moved, in particular in an axial direction (24) of the axis of rotation (25) of the post-processing tool (21), from a park position to an operating position in which it abuts the workpiece (11) to be post-processed.

4. Post-processing method according to claim 3, **characterized in that** the post-processing tool (21) is moved from a park position below the swivel table (4b) on the loading side or below the workpiece (11) to be post-processed from below in an upward direction to the operating position.

5. Post-processing method according to any one of the preceding claims, **characterized in that** during post-processing of the workpiece (11), the workpiece (11) is rotated on the swivel table (4b) on the loading side about a C-axis (14) which is perpendicular to the A-axis (9).

6. Post-processing method according to any one of the preceding claims, **characterized in that** the workpiece (11) on the loading side (6) and/or the swivel table (4b) on the loading side are rinsed or blown off.

7. Machine tool (1) for, in particular, machining processing of workpieces (11), comprising a twin swivel table which is mounted in a machine frame (2) such that it can be rotated about a horizontal axis (3) and comprises two swivel tables (4a, 4b) which are each mounted such that they can be rotated about an A-axis (9) which is parallel to the axis (3) of the twin swivel table, for receiving workpieces (11), one swivel table (4a) of which is provided on a processing side (5) within a processing chamber and the other swivel table (4b) is provided on a loading side (6) within a loading chamber, wherein the swivel table (4a) on the processing side and the swivel table (4b) on the loading side can be exchanged by pivoting the twin swivel table, **characterized by** a post-processing device (20) arranged within the closed loading chamber, comprising at least one rotatable post-processing tool (21), in particular at least one brush or polishing wheel, for post-processing the workpieces (11) located on the swivel table (4b) on the loading side, and by at least one drive for moving (26) the post-processing tool (21) transversely to its axis of rotation (25) and/or for pivoting (27) it about an axis extending transversely to its axis of rotation (25).

8. Machine tool according to claim 7, **characterized by** a drive (23), in particular a linear drive, for moving the post-processing tool (21), in particular in an axial direction (24) of the axis of rotation (25) of the post-processing tool (21), from a park position to an operating position in which it abuts the workpiece (11) to be post-processed.

9. Machine tool according to claim 8, **characterized in that** the park positon of the post-processing tool (21) is located below the swivel table (4b) on the loading side or below the workpiece (11) to be post-processed.

10. Machine tool according to any one of the claims 7 to 9, **characterized in that** the workpieces (11) are mounted on the swivel tables (4a, 4b) such that they can be rotated about a C-axis (14) which is perpendicular to the A-axis (9).

11. Machine tool according to any one of the claims 7 to 10, **characterized by** a blowing and/or rinsing device (29) arranged within the closed loading chamber for rinsing or blowing off the workpiece (11) located on the loading side (6) and/or the swivel table (4b) on the loading side.

## Revendications

1. Procédé de post-traitement ou de finissage, notamment procédé de nettoyage destiné au côté alimentation (6) d'une machine-outil (1) équipée d'un plateau pivotant double, monté à rotation autour d'un axe horizontal (3) et comprenant deux plateaux pivotants (4a, 4b) respectivement montés à rotation autour d'un axe des A (9) parallèle audit axe (3) du plateau pivotant double, en vue de recevoir des pièces (11), plateaux pivotants dont l'un (4a) est prévu sur un côté usinage (5), à l'intérieur d'un espace d'usinage, l'autre plateau pivotant (4b) étant prévu sur un côté alimentation (6), à l'intérieur d'un espace d'alimentation, ledit plateau pivotant (4a) situé côté usinage, et ledit plateau pivotant (4b) situé côté alimentation, pouvant être intervertis par pivotement imprimé audit plateau pivotant double,
**caractérisé par le fait**
**qu'**à l'issue du pivotement imprimé à une pièce (11) usinée, du côté usinage (5) au côté alimentation (6), ladite pièce (11) est retravaillée à l'aide d'au moins un outil rotatif de post-traitement ou de finissage (21) de la machine-outil (1) logé à l'intérieur de l'espace d'alimentation clos, notamment à l'aide d'au moins une brosse ou un disque de polissage, sachant que, durant le finissage, le plateau pivotant (4b) situé côté alimentation est animé, conjointement à la pièce (11) qui y est retenue, d'un pivotement autour de son axe des A (9), et donc par rapport à l'axe de rotation (25) de l'outil de finissage (21), ou bien ledit outil de finissage (21) est mû dans deux directions transversales (26) s'étendant transversalement vis-à-vis de son axe de rotation (25), et/ou est animé d'un pivotement autour d'un axe s'étendant transversalement vis-à-vis de son axe de rotation (25).

2. Procédé de finissage selon la revendication 1, **caractérisé par le fait que**, durant le finissage, la pièce (11) est placée en partie basse au niveau du plateau pivotant (4b) situé côté alimentation.

3. Procédé finissage selon l'une des revendications précédentes, **caractérisé par le fait qu'**à l'issue du pivotement imprimé à la pièce (11) usinée, du côté usinage (5) au côté alimentation (6), l'outil de finissage (21) est déplacé, en particulier dans une direction axiale (24) de l'axe de rotation (25) dudit outil de finissage (21), d'un emplacement d'attente à un emplacement de travail auquel il est en applique contre la pièce (11) devant être retravaillée ou post-traitée.

4. Procédé de finissage selon la revendication 3, **caractérisé par le fait que** l'outil de finissage (21) est déplacé de bas en haut, jusqu'à l'emplacement de travail, à partir d'un emplacement d'attente sous-jacent au plateau pivotant (4b) situé côté alimentation, ou à la pièce (11) devant être retravaillée ou post-traitée.

5. Procédé de finissage selon l'une des revendications précédentes, **caractérisé par le fait que**, durant le finissage de la pièce (11), ladite pièce (11) est animée d'une rotation, au niveau du plateau pivotant (4b) situé côté alimentation, autour d'un axe des C (14) perpendiculaire à l'axe des A (9).

6. Procédé de finissage selon l'une des revendications précédentes, **caractérisé par le fait que** la pièce (11) située côté alimentation (6), et/ou le plateau pivotant (4b) situé côté alimentation, est (sont) nettoyé(e)(s) par rinçage ou par soufflage.

7. Machine-outil (1) notamment destinée à l'usinage de pièces (11) par enlèvement de copeaux, équipée d'un plateau pivotant double monté à rotation autour d'un axe horizontal (3), dans le bâti (2) de ladite machine, et comprenant deux plateaux pivotants (4a, 4b) respectivement montés à rotation autour d'un axe des A (9) parallèle audit axe (3) du plateau pivotant double, en vue de recevoir des pièces (11), plateaux pivotants dont l'un (4a) est prévu sur un côté usinage (5), à l'intérieur d'un espace d'usinage, l'autre plateau pivotant (4b) étant prévu sur un côté alimentation (6), à l'intérieur d'un espace d'alimentation, ledit plateau pivotant (4a) situé côté usinage, et ledit plateau pivotant (4b) situé côté alimentation, pouvant être intervertis par pivotement imprimé audit plateau pivotant double,
**caractérisée par** un dispositif de finissage (20) logé à l'intérieur de l'espace d'alimentation clos et pourvu d'au moins un outil rotatif de finissage (21), en particulier d'au moins d'une brosse ou d'un disque de polissage dévolu(e) au finissage des pièces (11) placées au niveau du plateau pivotant (4b) situé côté alimentation ; et par au moins un entraînement affecté au déplacement (26) dudit outil de finissage (21) transversalement vis-à-vis de son axe de rotation (25), et/ou au pivotement (27) autour d'un axe s'étendant transversalement vis-à-vis de son axe de rotation (25).

8. Machine-outil selon la revendication 7, **caractérisée par** un entraînement (23), en particulier un entraînement linéaire conçu pour déplacer l'outil de finissage (21), notamment dans une direction axiale (24) de l'axe de rotation (25) dudit outil de finissage (21), d'un emplacement d'attente à un emplacement de travail auquel il est en applique contre la pièce (11) devant être retravaillée ou post-traitée.

9. Machine-outil selon la revendication 8, **caractérisée par le fait que** l'emplacement d'attente de l'outil de finissage (21) se trouve au-dessous du plateau pivotant (4b) situé côté alimentation, ou de la pièce (11) devant être retravaillée ou post-traitée.

10. Machine-outil selon l'une des revendications 7 à 9, **caractérisée par le fait que** les pièces (11) sont montées à rotation, au niveau des plateaux pivotants (4a, 4b), autour d'un axe des C (14) perpendiculaire à l'axe des A (9).

11. Machine-outil selon l'une des revendications 7 à 10, **caractérisée par** un dispositif (29) de soufflage et/ou de rinçage logé à l'intérieur de l'espace d'alimentation clos et dévolu, respectivement, au rinçage ou au soufflage de la pièce (11) située côté alimentation (6) et/ou du plateau pivotant (4b) situé côté alimentation.
